(19) Europäisches Patentamt

European Patent Office

Office européen des brevets

(11) **EP 1 256 139 B1**

(12) **EUROPÄISCHE PATENTSCHRIFT**

(45) Veröffentlichungstag und Bekanntmachung des Hinweises auf die Patenterteilung:
**01.10.2003 Patentblatt 2003/40**

(21) Anmeldenummer: **01913572.2**

(22) Anmeldetag: **03.02.2001**

(51) Int Cl.⁷: **H01M 8/02**, H01M 8/10

(86) Internationale Anmeldenummer:
**PCT/DE01/00443**

(87) Internationale Veröffentlichungsnummer:
**WO 01/061773 (23.08.2001 Gazette 2001/34)**

(54) **METHANOL-BRENNSTOFFZELLE MIT EINER METALLKATIONEN-LEITENDEN MEMBRAN**

METHANOL FUEL CELL COMPRISING A MEMBRANE WHICH CONDUCTS METAL CATIONS

PILE A COMBUSTIBLE AU METHANOL POURVUE D'UNE MEMBRANE CONDUCTRICE DE CATIONS METALLIQUES

(84) Benannte Vertragsstaaten:
**AT BE CH CY DE DK ES FI FR GB GR IE IT LI LU MC NL PT SE TR**

(30) Priorität: **19.02.2000 DE 10007651**

(43) Veröffentlichungstag der Anmeldung:
**13.11.2002 Patentblatt 2002/46**

(73) Patentinhaber: **Forschungszentrum Jülich GmbH 52425 Jülich (DE)**

(72) Erfinder: **DIVISEK, Jiri 52428 Jülich (DE)**

(56) Entgegenhaltungen:
**WO-A-97/40924        WO-A-99/54389
US-A- 4 959 132**

**Beschreibung**

Die Erfindung betrifft eine Brennstoffzelle, insbesondere eine Methanol-Brennstoffzelle, sowie ein Verfahren zum Betreiben dieser Brennstoffzelle.

Eine Brennstoffzelle weist eine Kathode, einen Elektrolyten sowie eine Anode auf. Der Kathode wird ein Oxidationsmittel, z. B. Luft oder Sauerstoff und der Anode wird ein Brennstoff, z. B. Wasserstoff oder Methanol zugeführt.

Verschiedene Brennstoffzellentypen sind bekannt, so beispielsweise die SOFC-Brennstoffzelle (SOFC = solid oxide fuel cell) aus der Druckschrift DE 44 30 958 C1 sowie die PEM-Brennstoffzelle (PEM = proton exchangemembrane) aus der Druckschrift DE 195 31 852 C1.

Die Betriebstemperatur einer PEM-Brennstoffzelle liegt bei ca. 80° C. Eine PEM-Brennstoffzelle kann prinzipiell entweder sauer oder alkalisch sein, je nach der Art der Membran oder des Arbeitsmediums. Üblicherweise bilden sich an der Anode einer PEM-Brennstoffzelle mit einem Protonenleiter in Anwesenheit des Brennstoffs mittels eines Katalysators Protonen. Die Protonen passieren den Elektrolyten und verbinden sich auf der Kathodenseite mit dem vom Oxidationsmittel stammenden Sauerstoff zu Wasser. Elektronen werden dabei freigesetzt und elektrische Energie erzeugt. Der Nachteil einer Methanol-Brennstoffzelle mit einem Protonenleiter besteht darin, daß die Protonen unter dem Einfluß des elektrischen Feldes in deren Solvathülle auch Wassermoleküle mit sich tragen. Dieser Elektrophoreseeffekt ist mit einem sehr hohen Drag-Faktor (Anzahl der mittransportierten Wassermoleküle pro Proton) verbunden. Dies bedeutet einerseits, daß zu viel Wasser von der Anode zur Kathode transportiert wird, was sich nachteilig auf die thermische Bilanz auswirkt, andererseits wird Methanol mittransportiert, was im allgemeinen zur Ausbildung eines Mischpotentials an der Kathode und damit zu einer deutlichen Leistungsminderung führt.

Mehrere Brennstoffzellen werden in der Regel zur Erzielung großer elektrischer Leistungen durch verbindende Elemente elektrisch und mechanisch miteinander verbunden. Diese Anordnung wird Brennstoffzellenstapel genannt.

Als Brennstoff kann unter anderem Methan oder Methanol vorgesehen werden. Die genannten Brennstoffe werden durch Reformierung oder Oxidation u. a. in Wasserstoff oder wasserstoffreiches Gas umgewandelt.

Es gibt zwei Typen der Methanol-Brennstoffzelle. Die sogenannte indirekte Methanol-Brennstoffzelle, bei der zuerst in einem vorgeschalteten Verfahrensschritt ein wasserstoffreiches Gasgemisch produziert wird, das in eine Polymerelektrolyt-Brennstoffzelle des üblichen Wasserstofftyps mit anodischem Pt/Ru-Katalysator eingeleitet wird. Diese Verfahrensvariante besteht deshalb aus zwei Stufen: der Gasherstellung und der eigentlichen Brennstoffzelle.

Eine weitere verfahrenstechnisch wesentlich einfachere Variante stellt die sog. Direkt-Methanol-Brennstoffzelle (DMFC) dar, bei der das Methanol ohne verfahrenstechnische Zwischenstufen der Brennstoffzelle direkt zugeführt wird. Diese Zelle hat im Vergleich zu der ersten allerdings den Nachteil, daß mit einem Protonenleiter als saurem Medium die direkte elektrochemische Methanoloxidation ein kinetisch stark gehemmter Vorgang ist, was im Vergleich zu einer Wasserstoffzelle große Verluste an der Zellspannung bedeutet. Auch die besten Ergebnisse der DMFC-Zellen lassen z. Zt. kaum erwarten, daß diese Zellen in klassischer Ausführung mit den indirekten Methanol-Brennstoffzellen konkurrieren können.

Dies liegt zum einen daran, daß sowohl die Methanolpermeationsrate als auch die Wasserverdampfungsenthalpie im Kathodenraum bei den derzeitigen Zellen zu hoch sind. Ferner wäre es aufgrund der unbefriedigenden Methanoloxidationsrate erforderlich, die Betriebstemperatur der Zelle deutlich über 100°C zu halten. Es existiert jedoch kein geeigneter Elektrolyt, der bei Temperaturen über 120°C funktionstüchtig wäre.

Um wirtschaftlich neben der indirekten Methanolzelle zu bestehen, darf die DMFC im Vergleich zu der indirekten Zelle bei gleicher Stromdichte nur um 100 mV kleinere Spannungen haben (mit MeOH-Permeation), ohne Permeation um 150 mV. Wie die Simulationsergebnisse zeigen, werden die größten Verluste durch die anodische Überspannung verursacht, was auf die sehr irreversible Elektrodenkinetik zurückzuführen ist. Deshalb muß auch die Katalysatorbelegung unwirtschaftlich hoch sein; durch die Methanolpermeation bedingt muß auch die kathodische Katalysatorbelegung zehnmal so hoch sein wie dies bei der Wasserstoffzelle der Fall ist.

Aus W. Vielstich: Brennstoffelemente, Verlag Chemie, 1965, S. 73-91 ist als Stand der Technik bekannt, eine alkalische Methanoloxidation in einer Brennstoffzelle vorzusehen. Diese Methode hat im Vergleich zu der bekannten sauren Variante den Vorteil, dass die elektrochemischen Reaktionen viel schneller ablaufen und somit die Leistung der Brennstoffzelle deutlich höher ausfällt. In der praktischen Anwendung kommt dabei KOH, welches durch ein Diaphragma in der Brennstoffzelle immobilisiert wird, zum Einsatz. Es ist allerdings seit langem aus W. Justi, A. Winsel; Kalte Verbrennung, Fuel Cells, Franz Steiner Verlag, Wiesbaden, 1962, bekannt, dass sich bei diesem Verfahren nachteilig Karbonat ausbildet, welches zum einen regelmäßig zum Verstopfen des Diaphragmas führt, und zum anderen die Leitfähigkeit des karbonathaltigen Elektrolyten im Diaphragma deutlich verringert. Weiterhin sind Probleme in der Dreiphasen-Zone der katalytischen Schicht der Brennstoffzellen-Elektrode durch die Karbonatbildung nicht auszuschließen.

Aus WO 99/54389 sind protonenleitende Membranen für PEM-Brennstoffzellen bekannt, wobei dort neben dem üblichen kommerziell verfügbaren Ionomer Nafion® auch Säure-Base-Polymerblends und Polymerblendmembranen als protonenleitende Elektrolyten in Membranbrennstoffzellen offenbart werden.

In Brennstoffzellen kompakt aufgebaute, langlebige Ionenaustauschermembranen (IEM) zu verwenden wird auch in WO 97/40924 beschrieben. Dort wird eine mehrschichtige Membran offenbart, bei der die Ionenleitfähigkeit deutlich höher ist, als bei anderen, aus dem Stand der Technik bekannten Ionenaustauschermembranen. Die Membran besteht aus einer porösen Polymermembran, die mit einem perfluorierten Ionenaustauscher Material beschichtet ist.

Aufgabe der Erfindung ist es, eine Brennstoffzelle für die Umsetzung von Methanol zu schaffen, die effektiv ist und bei der die vorgenannten Nachteile vermieden werden. Ferner ist es Aufgabe der Erfindung, ein Verfahren zum Betreiben einer solchen Brennstoffzelle zu schaffen.

Die Aufgabe wird gelöst durch eine Brennstoffzelle mit der Gesamtheit der Merkmale des Anspruchs 1 sowie durch ein Verfahren gemäß Nebenanspruch. Vorteilhafte Ausführungsformen ergeben sich aus den darauf rückbezogenen Unteransprüchen.

Die anspruchsgemäße Methanol-Brennstoffzelle nach Anspruch 1 umfaßt einen Anodenraum mit einer Anode, einen Kathodenraum mit einer Kathode, sowie einer zwischen Anode und Kathode befindlichen Membran. Diese Membran ist eine Metallkationen-leitende Membran. Darunter ist zu verstehen, daß eine solche Membran an ihrer einen Seite Metallkationen aufnehmen und an der gegenüberliegenden Seite Metallkationen zur Verfügung stellen kann. Dieser Effekt kann durch Ionenaustausch, Diffusion oder auch durch Ionenleitung erreicht werden. Die Membran weist vorteilhaft eine gute Beständigkeit gegenüber Karbonat auf. Die Anwesenheit von Karbonat führt regelmäßig nicht zu einer Verstopfung der Membran und auch nicht zu einer negativen Beeinflussung der Leitfähigkeit derselben.

Im Unterschied zu Protonen-leitenden Membranen, wie sie aus dem Stand der Technik bekannt sind, leitet die erfindungsgemäße Membran Metallkationen. Geeignete Metallkationen sind z. B. $Li^+$, $Na^+$ oder auch $K^+$. Diese Metallkationen weisen einen verhältnismäßig kleinen Ionenradius innerhalb der Gruppe der Metallkationen und regelmäßig eine hohe Leitfähigkeit innerhalb der Membran auf. Unter dem Einfluß eines elektrischen Feldes tragen sie in der Membran vorteilhaft nur eine sehr geringe Menge an Wasser in Form einer Solvathülle mit sich. Weiterhin weist die erfindungsgemäße Membran nur eine sehr geringe Methanolpermeationsrate auf. Die erfindungsgemäße Membran ermöglicht daher vorteilhaft den positiven Ladungsträgertransport ohne die Nachteile der Methanolpermeation und der daraus entstehenden Mischpotentialbildung an einer Kathode aufzuweisen, wie sie üblicherweise bei einer Protonen-leitenden Membran auftreten.

Ein vorteilhaftes Beispiel für eine anspruchsgemäße Membran nach Anspruch 2 ist eine Kationaustauscher-Nembran, wie z.B. Nafion® oder auch Neosepta®. Diese Membranen sind typischerweise mit einem einwertigen Alkalimetall, z. B. $Li^+$, $Na^+$, oder $K^+$ beladen. Sie weisen eine gute Leitfähigkeit auf und besitzen eine hohe Stabilität gegenüber Karbonatlösungen. Daher sind sie besonders für den Einsatz in einer alkalischen Brennstoffzelle geeignet.

In einer vorteilhaften Ausführung der erfindungsgemäßen Methanol-Brennstoffzelle nach Anspruch 3 weist diese Mittel auf, die eine Rückführung von Metallkationen von einem Kathoden- zu einem Anodenraum bzw. von einer Kathode zu einer Anode ermöglichen. Dieses Mittel bewirkt, daß Metallkationen, die beispielsweise von einer Anode (Anodenraum) durch die Membran zur Kathode (Kathodenraum) gelangen, von dort wieder zu der Anode (Anodenraum) zurück gelangen können (Kreislauf). Ein solches Mittel kann beispielsweise durch eine Leitung zwischen einem Anoden- und einem Kathodenraum realisiert werden. Vorteilhaft führt dieses anspruchsgemäße Mittel zu einer internen Kreislaufführung der Metallionen, d. h. innerhalb einer Brennstoffzelle. Das Mittel zur Rückführung von Metallkationen kann aber auch vorteilhaft zwischen verschiedenen Brennstoffzellen angeordnet sein, so daß der daraus entstehende Metallkationenkreislauf mehrere Brennstoffzellen umfaßt.

In einer weiteren vorteilhaften Ausführungsform der Methanol-Brennstoffzelle nach Anspruch 4 liegen die Kationen in einer alkalischen Lösung (Base) vor. Das Mittel zur Rückführung der Metallkationen ist im einfachsten Fall eine Flüssigkeitsleitung, welche den Anoden- und den Kathodenraum miteinander verbindet. Ein geeignetes Mittel ist beispielsweise eine einfache temperatur- und korrosionsbeständige Rohrleitung zwischen Anoden- und Kathodenraum. Vorratsbehälter, Pumpen oder Zu- bzw. Abläufe können optional zwischengeschaltet sein.

Ein anspruchsgemäßer Methanol-Brennstoffzellenstapel nach Anspruch 5 weist mindestens zwei, vorteilhaft jedoch mehrere Brennstoffzellen gemäß den Ansprüchen 1 bis 4 auf. Im Fall mehrerer miteinander in Verbindung stehender erfindungsgemäßer Methanol-Brennstoffzellen eines Stapels ist sowohl jeweils eine interne als auch über mehrere Brennstoffzellen eine externe Rückführung der Metallkationen denkbar.

Bei der internen Rückführung kommt es zu einer Kreislaufführung der Metallkationen innerhalb jeder einzelnen Brennstoffzelle.

Beim Hintereinanderschalten von mehreren anspruchsgemäßen Methanol-Brennstoffzellen ist unter einem Mittel zur Kreislaufführung vom Metallionen jedoch auch zu verstehen, daß beispielsweise Metallkationen von einer Anode A1 einer Methanol-Brennstoffzelle BZ1 durch die Membran zu einer Kathode K1 und von dort über eine Leitung zu einer weiteren Methanol-Brennstoffzelle BZ2 gelangen. Dort werden die Metallkationen von einer Anode A2 durch eine Membran über eine Kathode K2 wieder zu der Anode A1 der ersten Brennstoffzelle BZ1 geführt. In diesem Fall umfaßt der Metallionenkreislauf beispielsweise zwei Methanol-Brennstoffzellen eines Stapels. Es können auch mehrere Brennstoffzellen beliebig kombiniert werden.

Bei dem Verfahren zum Betreiben einer Methanol-Brennstoffzelle gemäß Anspruch 6 gelangen während des Betriebs der Brennstoffzellen Metallkationen durch die Membran von der Anode zur Kathode. Die Metallkationen entstehen an der Anode bei der alkalischen Oxidation des Brennstoffs, in diesem Fall Methanol. Aus der Kathodenseite verbinden sich die von der Membran zur Verfügung gestellten Metallkationen mit den vorhandenen Hydroxylionen zu einer Base. Diese wird durch geeignete Mittel zum Anodenraum zurückgeführt. Die Metallkationen übernehmen den Ladungsträgertransport innerhalb der Membran. Sie weisen auf Grund ihres Ionenradius gegenüber Protonen eine deutlich geringere Solvathülle auf, so daß vorteilhaft weniger Wasser zusammen mit den Kationen zur Kathode transportiert wird als im Vergleich zu Protonenleitenden Membranen. Das alkalische Verfahren hat den Vorteil der verbesserten elektrochemischen Umsetzungen an den Elektroden, so daß regelmäßig verbesserte Wirkungsgrade erzielt werden können. Ferner ist eine separate Produktwasserführung nicht notwendig.

Bei dem Verfahren zum Betreiben einer Methanol-Brennstoffzelle gemäß Anspruch 7 werden die im Kathodenraum befindlichen Metallkationen zu einem Anodenraum zurückgeführt. Dadurch wird eine materialschonende Kreislaufführung der Metallkationen ermöglicht.

Denkbar ist sowohl eine direkte Rückführung der Metallkationen von dem Kathoden- in den Anodenraum einer Brennstoffzelle, als auch die Kreislaufbildung durch Einbindung mehrerer Brennstoffzellen. Vorteilhaft geschieht die Rückführung der Metallkationen im Form einer Base, z. B. NaOH oder KOH (Anspruch 8). Dies hat den zusätzlichen Vorteil, daß das Vorliegen einer Base sowohl im Anodenraum als auch im Kathodenraum zusätzlich eine Erhöhung der elektrochemischen Umsetzungen des Methanols bzw. des Sauerstoffs im Vergleich zu den entsprechenden Reaktionen im sauren Milieu bewirkt.

Im folgenden sind die einzelnen Reaktionsschritte der Methanol-Brennstoffzelle wiedergegeben (Beispiel mit $Na^+$ als Metallkation):

Anode:

$$CH_3OH + 6\ NaOH \rightarrow CO_2 + 6\ Na^+ + 5\ H_2O + 6\ e^-$$

Kathode:

$$6\ Na^+ + 3\ H_2O + {}^3/_2\ O_2 + 6\ e^- \rightarrow 6\ NaOH$$

Kreislauf:

$$6\ NaOH\ (Kathode) \rightarrow 6\ NaOH\ (Anode)$$

Das Reaktionsschema erfüllt die Brutto-Reaktionsgleichung der Verbrennungsreaktion des Methanols

$$CH_3OH + {}^3/_2 O_2 \rightarrow CO_2 + 2\ H_2O$$

und ist somit als DMFC-Reaktionsprozeß geeignet.

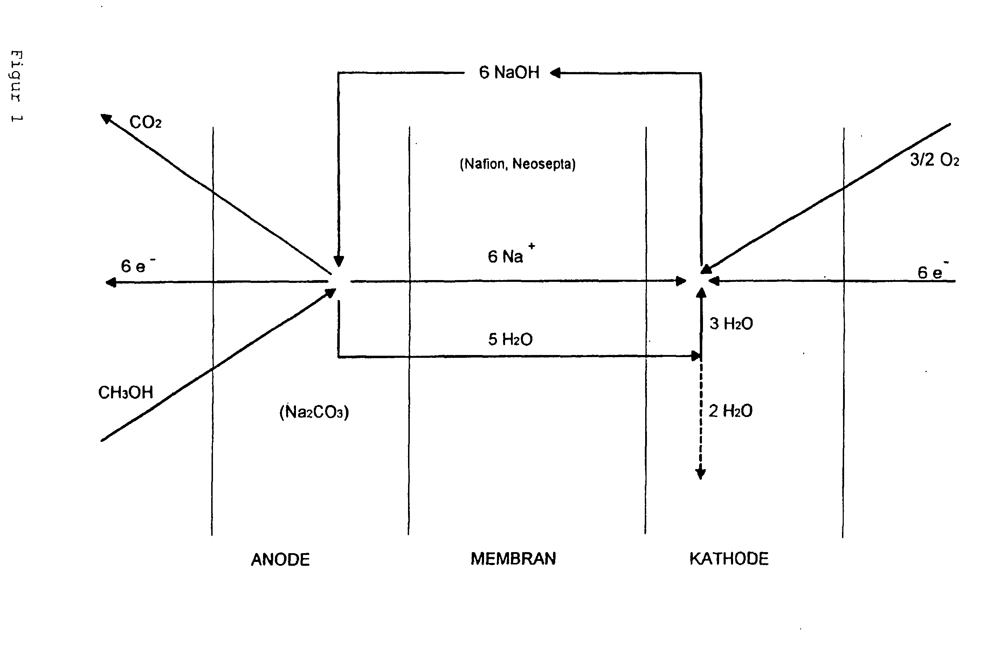

Die Figur 1 veranschaulicht das Prinzip der erfindungsgemäßen Methanol-Brennstoffzelle bzw. dessen Verfahrensweise.

Es wird im folgenden eine Verfahrensvariante erläutert, welche auf der Anwendung eines Kreislaufs mit alkalischen Ionen basiert. Dieser Kreislauf ersetzt die bisherige Prozeßführung mit dem Produktwasser.

Im Rahmen der Erfindung wurde gefunden, daß die im Einleitungsteil beschriebenen Nachteile des Standes der Technik durch die Anwendung einer alkalischen DMFC weitgehend überwunden werden können. Dies hat folgende prinzipielle Vorteile:

- Die alkalische Prozeßführung ist grundsätzlich nicht mit den geschilderten Drag-Problemen verbunden. Entweder werden alkalische Ionen überführt, d. h. die ionische Stromrichtung in der Membran erfolgt in umgekehrter Richtung wie im sauren Medium, oder es werden hier, wie im erfindungsgemäßen Fall, alkalische Ionen verwendet, welche den Drag-Faktor und die damit verbundene Methanolpermeationsrate generell niedriger halten als eine protonenleitende Membran.

- Die anodische Methanoloxidation wird durch eine basisch katalysierte Dehydrierung eingeleitet, wobei der gebildete Wasserstoff selbst elektrochemisch aktiv ist. Es ist deshalb zu erwarten, daß die Gesamtkatalyse günstiger abläuft als im sauren Medium.

- Die kathodische Sauerstoffreduktion im alkalischen Medium wird nicht so stark gehemmt wie im sauren. Auch hier können Spannungsgewinne erwartet werden.

- Es wäre sogar möglich, auf Edelmetalle als Katalysatoren zu verzichten. Es kann bei der Methanolelektrode im alkalischen Medium Raney-Ni als Elektrodenmaterial verwendet werden. Bei der Sauerstoffelektrode wären z.B. Ag, Co oder Ni als Katalysatoren denkbar.

Ein entsprechendes Verfahrensschema wird in Abb. 1 dargestellt. Es wird eine, mit einwertigem Alkalimetall (Li, Na, K) beladene, Kationenaustauscher-Membran verwendet (Nafion®, Neosepta®). Diese Membranen existieren bereits und sind speziell zum Zwecke der Chloralkali-Elektrolyse entwickelt worden, so daß hier Stabilitätsprobleme oder ähnliches nicht in Frage kommen. Die Nafion© Membran besitzt bekanntlich auch eine ausgezeichnete Stabilität in Karbonatlösungen und wird hier bereits eingesetzt. Die elektrische Leitfähigkeit ist identisch mit der bei der Chloralkali-Elektrolyse. Sie ist allerdings insgesamt geringer als bei der Protonenform. Genauere Werte müssen gemessen werden, ein Schätzwert gibt den Faktor 2 bis 3 an.

Im Vergleich zu der üblichen Protonen-leitenden DMFC-Zelle ist es bei der erfindungsgemäßen Methanol-Brennstoffzelle notwendig, einen zusätzlichen kathodischanodischen Hydroxidkreislauf einzuführen. Eine separate Produktwasser-Führung ist nicht erforderlich, da die kationische Stromleitung mit einem gewissen Drag-Faktor verbunden sein wird. Zum Aufrechterhalten des Prozesses müßte minimal ein Drag-Faktor von 5/6 vorhanden sein. Wegen der Größe des Kations ist zu erwarten, daß deutlich weniger Wasser und somit auch Methanol von der Anode zur Kathode überführt wird als bei der Protonen-leitenden DMFC-Zelle.

**Patentansprüche**

1. Verfahren zum Betreiben einer alkalischen Methanol-Brennstoffzelle mit einer Metallkationen-leitenden Membran,
   mit dem Schritt

   - an der Anode werden aus einer alkalischen Lösung Metallkationen freigesetzt,
   - die Metallkationen gelangen unter dem Einfluss eines elektrischen Feldes durch die Metallkationen-leitende Membran von der Anode zur Kathode.

2. Verfahren zum Betreiben einer alkalischen Methanol-Brennstoffzelle nach vorhergehendem Anspruch, bei dem die Metallkationen von der Kathode zur Anode zurückgeführt werden.

3. Verfahren zum Betreiben einer alkalischen Methanol-Brennstoffzelle nach einem der vorhergehenden Ansprüche 1 bis 2,
   mit den Schritten

   - an der Anode werden aus einer anodenseitig vorliegenden Metallkationen aufweisenden Base Metallkationen freigesetzt;
   - die durch die Membran an die Kathode gelangten Metallkationen bilden mit den dort vorliegenden Hydroxylionen eine Base;
   - die die Metallkationen aufweisende Base wird von der Kathode zur Anode zurückgeführt.

4. Verfahren zum Betreiben eines alkalischen Methanol-Brennstoffzellenstapels mit wenigstens zwei Methanol-Brennstoffzellen nach einem der Ansprüche 1 bis 3, bei dem die Metallkationen im Kathodenraum einer ersten alkalischen Methanol-Brennstoffzelle zum Anodenraum einer zweiten alkalischen Methanol-Brennstoffzelle geführt werden.

5. Alkalische Methanol-Brennstoffzelle zur Durchführung des Verfahrens nach einem der Ansprüche 1 bis 4, umfassend einen Anodenraum mit einer Anode, einen Kathodenraum mit einer Kathode, sowie einer zwischen Anode und Kathode befindlichen Membran, **gekennzeichnet durch** eine Metallkationen-leitende Membran und Mittel zur Rückführung von Metallkationen in Form einer basischen Lösung vom Kathoden- zum Anodenraum.

6. Alkalische Methanol-Brennstoffzelle nach vorhergehendem Anspruch 5, mit einer Flüssigkeitsleitung zwischen dem Anodenraum und dem Kathodenraum als Mittel zur Rückführung.

7. Brennstoffzellenstapel, umfassend wenigstens eine alkalische Methanol-Brennstoffzelle nach einem der vorhergehenden Ansprüche 5 bis 6.

**Claims**

1. Method for operating an alkaline methanol fuel cell with a membrane which conducts metal cations with the step

   - metal cations are released on the anode from an alkaline solution,
   - the metal cations go from the anode to the cathode through the membrane which conducts metal cations under the influence of an electric field.

2. Method for operating an alkaline methanol fuel cell according to the previous claim, in which the metal cations are returned from the cathode to the anode.

3. Method for operating an alkaline methanol fuel cell according to one of the previous claims 1 to 2, with the steps

   - metal cations are released on the anode from a base with metal cations on the anode side;
   - the metal cations which reach the cathode through the membrane form a base with the hydroxyl ions there;
   - the base with the metal cations is returned from the cathode to the anode.

4. Method for operating an alkaline methanol fuel cell stack with at least two methanol fuel cells according to one of the claims 1 to 3, in which the metal cations in the cathode area of a first alkaline methanol fuel cell are taken to the anode area of a second alkaline methanol fuel cell.

5. Alkaline methanol fuel cell for carrying out the method according to one of claims 1 to 4, comprising an anode area with an anode, a cathode area with a cathode and a membrane between anode and cathode, **characterised by** a membrane which conducts metal cations and means of return of the metal cations in the form of a basic solution from the cathode to the anode area.

6. Alkaline methanol fuel cell according to the previous claim 5 with a fluid pipeline between the anode area and the cathode area as means of return.

7. Fuel cell stack, comprising at least one alkaline methanol fuel cell according to one of the previous claims 5 to 6.

**Revendications**

1. Procédé pour faire fonctionner une pile à combustible au méthanol alcaline ayant une membrane conductrice de cations métalliques,
comprenant le stade

   - à l'anode, des cations métalliques sont libérés d'une solution alcaline,
   - les cations métallique vont, sous l'influence d'un champ électrique, de l'anode à la cathode en passant à travers la membrane conductrice de cations métalliques.

2. Procédé pour faire fonctionner une pile à combustible au méthanol alcaline suivant la revendication précédente, dans lequel les cations métalliques sont retournés de la cathode à l'anode.

3. Procédé pour faire fonctionner une pile à combustible au méthanol alcaline suivant l'une des revendications précédentes 1 à 2,
comprenant les stades

   - à l'anode, on libère des cations métalliques d'une base ayant des cations métalliques présents du côté de l'anode ;
   - les cations métalliques qui arrivent, à travers la membrane à la cathode, forment avec les ions hydroxyles qui y sont présents une base ;
   - la base ayant les cations métalliques est retournée de la cathode à l'anode.

4. Procédé pour faire fonctionner un empilement de piles à combustible au méthanol alcalines ayant au moins deux piles à combustible au méthanol suivant l'une des revendications 1 à 3, dans lequel les cations métalliques de la chambre cathodique d'une première pile à combustible alcaline sont envoyés à la chambre anodique d'une deuxième pile à combustible au méthanol alcaline.

5. Pile à combustible au méthanol alcaline pour la mise en oeuvre du procédé suivant l'une des revendications 1 à 4, comprenant une chambre anodique ayant une anode, une chambre cathodique ayant une cathode ainsi qu'une membrane se trouvant entre l'anode et la cathode, **caractérisée par** une membrane conductrice de cations métalliques et par des moyens de retour des cations métalliques sous la forme d'une solution basique de la chambre cathodique à la chambre anodique.

6. Pile à combustible au méthanol alcaline suivant la revendication 5 précédente, comprenant un conduit pour du liquide entre la chambre anodique et la chambre cathodique comme moyen de retour.

7. Empilement de piles à combustible comprenant au moins une pile à combustible au méthanol alcaline suivant l'une des revendications 5 à 6 précédentes.

Figur 1